# EUROPEAN PATENT SPECIFICATION

(11) **EP 3 641 542 B1**
(45) Date of publication and mention of the grant of the patent: **07.08.2024**
(21) Application number: 18724328.2
(22) Date of filing: 19.04.2018
(51) Int. Cl.: A01N 53/00, A01N 47/16, A01P 17/00, A01N 25/34, A01N 25/10, A01P 7/04, D06M 13/224

(54) **INSECT-REPELLING TEXTILE PRODUCT**
INSEKTENABWEISENDES TEXTILPRODUKT
PRODUIT TEXTILE ANTI-INSECTICIDE

(30) Priority: 19.04.2017 BE 201705271
(43) Date of publication of application: 29.04.2020
(73) Proprietor: Concordia Textiles NV, 8790 Waregem (BE)
(72) Inventor: TUYTENS, Manu, 8790 Waregem (BE); BAEKELANDT, Carl, 8790 Waregem (BE); INGHELBRECHT, Kurt, 8790 Waregem (BE)
(74) Representative: Brantsandpatents bv
(86) International application number: PCT/IB2018/052712
(87) International publication number: WO 2018/193397

(56) References cited:
- WO-A2-2008/083017
- WO-A2-2012/069908
- WO-A2-2012/070778
- US-A1- 2010 261 396
- US-A1- 2016 152 803

## Description

### TECHNICAL DOMAIN

The present invention is related to a protracted insect-repelling, printable textile product with good flame resistance, and to a method for making such a textile product.

### PRIOR ART

Although they certainly have their usefulness in the animal world, biting insects such as fleas and mosquitoes are particularly perceived to be annoying and unpleasant. In addition, certain mosquitoes are known vectors for diseases such as malaria, yellow fever, dengue fever and chikungunya. The annoyance caused by insects can be alleviated by limiting the insect population. However, effectively controlling insect populations even in urban areas is a daunting task. In natural environments, such as extensive woods and forests, this is completely impossible for practical reasons.

Fortunately, various commercially available insect-repelling products which limit the chance of contracting such diseases are available. However, these insect-repelling products need to be applied every time the user exposes himself to insects. This repeated re-application can be unpleasant, or even impossible in situations such as often encountered by soldiers on the battlefield. It is therefore not surprising that inter alia military personnel, forestry workers or hikers, who are often exposed to biting insects, preferably have insect-repelling clothing at their disposal.

Such insect-repelling properties can be obtained by providing the textile with an insect-repelling coating. Permethrine is a synthetic pyrethroid that has insect-repelling as well as insecticidal properties. Pyrethroids, such as permethrine for example, are effective for combatting various kinds of vermin, such as ticks, cockroaches, house flies, mosquitoes, black flies, fleas and other flying or creeping insects. Consequently, the treatment of textile by submersion in a solution containing permethrine, for example, is described extensively in US 6,030,697 and US 2012/0100198, for example.

EP 1 598 475 describes a method for making a fabric with insect-repelling properties, by submersion in a solution comprising permethrine, an acrylic binding agent and an elastomer. The presence of the binding agent and elastomer ensure an improved resistance to washing out.

WO2008/083017 discloses insect repellant fabrics which also have flame retardant properties. The fabrics have insect repellant molecules absorbed in the fibers of the fabrics.

US2010/0261396 discloses a method for preparing insecticidally treated textile having improved properties.

WO2012/069908 discloses the use of an anti- mosquito composition as an additive of a washing solution for giving anti-mosquito properties to a non- treated fabric through a domestic or industrial washing process of said fabric.

However, the washing out of insect-repelling means in clothing, in the course of which the insect-repelling properties are lost, remains a tricky matter. In addition, the bearer of the known insect-repelling clothing, particularly when wearing new textile products, is unavoidably exposed to high concentrations of insect-repelling means, which can have adverse effects on health. Textile for use in military clothing, or clothing for forestry workers or hikers should also be pleasant to the touch and be water-repelling, flame-retarding, tear-resistant, anti-static and well printable.

The present invention seeks to find a solution for at least some of the aforementioned problems. More specifically, the invention seeks to provide a well printable textile product which is insect-repelling for long periods of time, without exposing the user to high concentrations of insect-repelling means. The textile product sought must also have good flame-retarding, mechanical and anti-static properties.

### SUMMARY OF THE INVENTION

To this end, the invention provides an insect-repelling textile product according to Claim 1.

In a first aspect, the invention provides an insect-repelling textile product comprising: one or more cellulose extruded fibre comprising micro-fine dispersions of an insect-repelling means; and one or more cellulose fibres in an amount of at least 35% by weight with respect to the total weight of the textile product, and further one or more synthetic fibres comprising polyester fibres and/or polyamide fibres.

This offers as an advantage that an insect-repelling textile product with a pleasant touch and good printability is provided. Good printability is particularly of great importance for army clothing, where camouflage patterns are often desired. Also provided is a textile product in which the washing out of the insect-repelling means is limited.

In a second aspect, the invention provides an insect-repelling yarn comprising: 35 % to 60 % of cellulose fibres; 1 to 30 % of of cellulose extruded fibres comprising an insect-repelling means present as micro-fine dispersion; 5 % to 50 % of meta-aramide fibres; 1 % to 30 % of para-aramide fibres, all "%" are by weight with respect to the total weight of the yarn.

The composition of the yarn allows a yarn to be provided having good flame-retarding properties, excellent mechanical strength, good printability and a protracted insect-repelling character.

In a third aspect, the invention provides a method for obtaining an insect-repelling textile product according to the first aspect of the invention. This offers as an advantage that full-bath treatment with insect-repelling means is not needed. In addition, the washing out of insect-repelling means in the textile products obtained is limited, which limits the leaching of such harmful compounds in the environment.

In a fourth aspect, the invention provides a garment comprising an insect-repelling textile product according to the first aspect of the invention. This offers as an advantage that tear-resistant garments are provided with inter alia a pleasant touch, flame-retarding properties and excellent insect-repelling action, without the bearer being exposed to high concentrations of insect-repelling means.

### FlGURES

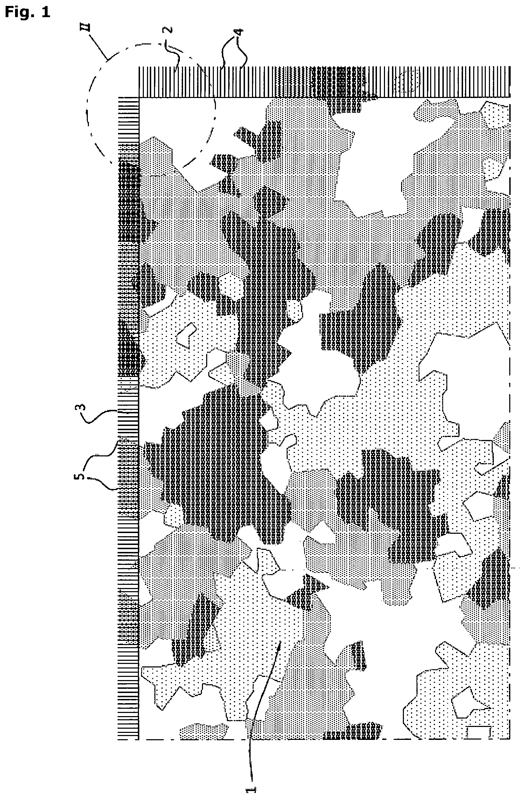

Figure 1 depicts a simplified representation of the front side of an insect-repelling fabric with camouflage pattern according to an embodiment of the present invention.

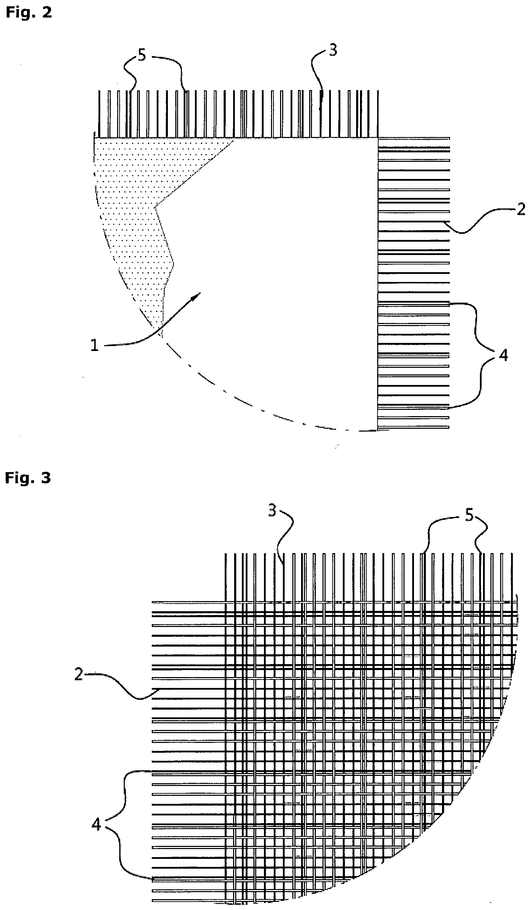

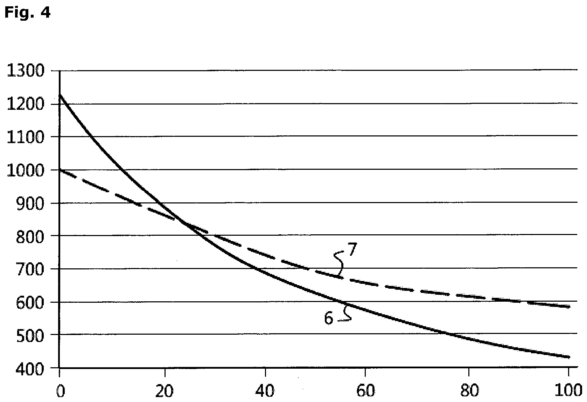

Figure 2 depicts a simplified representation of a detail of the front side of an insect-repelling fabric with camouflage pattern according to an embodiment of the present invention. Figure 3 depicts a simplified representation of the rear side of an insect-repelling fabric, comprising both single and double yarns for the chain and weft, according to a preferred form of the present invention. Figure 4 shows the concentration course of permethrine as a function of the number of washing events for a permethrine-impregnated textile, and a textile comprising a permethrine-containing fibre, according to an embodiment of the present invention.

### DETAILED DESCRIPTION OF THE INVENTION

Unless otherwise defined, all terms used in the description of the invention, including technical and scientific terms, have the meaning that is generally understood by the person skilled in the technical field of the invention. For a better appraisal of the description of the invention, the following terms are explicitly explained.

In this document, "a", "an" and "the" refer to both the singular and plural unless the context clearly implies otherwise. For example, "a segment" means one or more than one segment.

Where "approximately" or "about" are used in this document for a measurable quantity, a parameter, a period of time or moment, and such, then variations are meant of +/-20% or less, preferably +/-10% or less, more preferably +/-5% or less, still more preferably +/-1% or less, and even still more preferably +/-0.1% or less than and of the cited value, insofar such variations are applicable in the described invention. Herewith it should be understood, however, that the value of the quantity for which the term "approximately" or "about" is used, is itself specifically disclosed.

The terms "comprise", "comprising", "consist of", "consisting of", "provided with", "contain", "containing", "include", "including", "encompass", "encompassing" are synonyms and are inclusive or open terms indicating the presence of that which follows, and which do not exclude or prevent the presence of other components, features, elements, members, steps, known from or described in the prior art.

The citation of numerical intervals by the end points comprises all whole numbers, fractions and/or real numbers between the end points, including these end points.

With the term "textile product", a fabric, a piece of knitwear, a nonwoven or a multi-layer textile is meant, as well as any material comprising at least one of said elements. The cohesion of the textile product arises by spinning, twining, weaving, knitting, knotting, braiding, gluing, extruding or by felting the base materials. In a preferred embodiment, the textile product is a fabric. Fabrics generally have preference because of their durability and versatility. The fabric can comprise a plurality of yarns, which are woven or knotted in a fabric structure. Such a textile product can be composed from one type of yarn, or from two or more types of yarn.

With the term "insect-repelling means" any suitable compound is meant which discourages insects to land or crawl on a surface on which the compound is applied, or leads to the succumbing of insects that have come into contact with the means. Arachnids contain mites (for example *Sarcoptes scabiei, Dermatophagoides pteronys-*sinus, *Dermatophagoides farinae, Dermanyssus gallinae, Acarus siro),* and ticks (for example *Ixodes ricinus, Ixodes scapularis, Argas reflexus, Ornithodorus moubata, Boophilius microplus, Amblyomma hebraeum, Rhipicephalus sanguineus).* Sucking insects include mainly mosquitoes (for example *Aedes aegypti, Aedes albopictus, Aedes vexans, Culex quinquefasciatus, Culex tarsalis, Anopheles gambiae, Anopheles albimanus, Anopheles stephensi, Mansonia titillans),* sandflies (such as *Phlebotomus papatasii)* mosquitoes (such as *Culicoides furens),* black flies (such as *Simulium damnosum),* biting house flies (such as *Sto-moxys calcitrans),* tsetse flies (such as *Glossina morsitans morsitans),* horse flies (such as *Taba-nus nigrovittatus, Chrysops caeeutiens),* house flies (such as *Musca domestica, Musca vetustissima, Fannia canicularis),* flesh flies (such as *Sarcophaga carnaria),* Myiasis-causing flies (such as *Lucilia cuprina, Chrysomyia chloro-pyga, Hypoderma Hovis, Hypoderma lineatum, Dermatobia hominis, Oestrus ovis, Gaste-rophilus intestinalis, Cochliomyia hominivorax),* insects (such as *Cimex lectularius, Rhodnius prolixus, Triatoma infestans),* lice (such as *Pediculus humanis Haematopinus suis, Damalina ovis),* fleas (such as *Pulex irritans, Xenopsylla cheopis, Ctenocephalides canis, Ctenocephalides felis)* and sand fleas *(Tunga penetrans).* Biting insects include cockroaches (for example *Blattella germanica, Periplaneta americana, Blatta orientalis, Supella longipalpa),* beetles (for example *Sitiophilus granarius, Tenebrio molitor, Dermestes lardarius, Stegobium paniceum, Anobium punctatuun, Hylotrupes bajulus),* termites (for example *Reticulitermes lueifugus),* wasps (for example *Vespula germanica)* and larvae of moths (for example *Ephestia elutella, Ephaestia cautella, Plodia interpunctella, Hofmannophila pseudospretella, Tineola bisselliella, Tinea pellionella, Trichophaga tapetzella).*

Suitable insect-repelling means include inter alia compounds of the class of the organophosphates, pyrethroids, neonicotinoids and carbamates.

The group of the organophosphates includes: acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-S-methyl, demeton-S-methylsulphon, dialifos, diazinon, dichlofenthion, dichlorvos/DDVP, dicrotophos, dimethoate, dimethylvinphos, dioxabenzophos, disulphoton, EPN, ethion, ethoprophos, etrimfos, famphur, fenamiphos, fenitrothion, fensulphothion, fenthion, flupyrazophos, fonofos, formothion, fosmethilan, fosthiazate, heptenophos, iodofenphos, iprobenfos, isazophos, isofenphos, isopropyl O-salicylate, isoxathion, malathion, mecarbam, methacrifos, methamidophos, methidathion, mevinphos, monocrotophos, naled, omethoate, oxydemeton-methyl, parathion (-methyl/ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulphotep, sulprofos, tebupirimfos, temephos, terbufos, tetrachlorvinphos, thiometon, triazophos, trichlorfon and vamidothion.

The pyrethroids include: acrinathrin, allethrin (d-cis-trans, d-trans), beta-cyfluthrin, bifenthrin, bioallethrin, bioallethrin-S-cyclopentyl-isomer, bioethanomethrin, biopermethrine, bioresmethrin, chlovaporthrin, cis-cypermethrine, cis-resmethrin, cis-permethrine, clocythrin, cycloprothrin, cyfluthrin, cyhalothrin, cypermethrine (alpha-, beta-, theta-, zeta-), cyphenothrin, deltamethrin, empenthrin (1R-isomer), esfenvalerate, etofenprox, fenfluthrin, fenpropathrin, fenpyrithrin, fenvalerate, flubrocythrinate, flucythinate, flufenprox, flumethrin, fluvalinate, fubfenprox, gamma-cyhalothrin, imiprothrin, kadethrin, lambda-cyhalothrin, metofluthrin, permethrine (cis-, trans-), phenothrin (1R-trans isomer), prallethrin, profluthrin, protrifenbute, pyresmethrin, resmethrin, RU 15525, silafluofen, tau-Fluvalinate, tefluthrin, terallethrin, tetramethrin (-1R-isomer), tralomethrin, transfluthrin, ZXI 8901 and pyrethrin (pyrethrum).

In a most advantageous embodiment, said insect-repelling means is permethrine. Permethrine can be provided as cis-permethrine, trans-permethrine or as a mixture of cis-permethrine and trans-permethrine. In a preferred embodiment, permethrine is provided as a mixture of cis-permethrine and trans-permethrine. In a first advantageous embodiment, said mixture of cis-permethrine and trans-permethrine comprises an amount of 15% to 35%, preferably 20% to 30% and most preferably 25% of cis-permethrine with respect to the total amount of permethrine. In a second advantageous embodiment, said mixture of cis-permethrine and trans-permethrine comprises an amount of 30% to 50%, preferably 35% to 45% and most preferably 40% of cis-permethrine with respect to the total amount of permethrine.

The neonicotinoids include acetamiprid, clothianidin, dinotefuran, imidacloprid, nitenpyram, nithiazine, thiacloprid and thiamethoxam.

The group of the carbamates includes: alanycarb, aldicarb, aldoxycarb, allyxycarb, aminocarb, bendiocarb, benfuracarb, bufencarb, butacarb, butocarboxim, hutoxycarboxim, carbaryl, carbo-furan, carbosulfan, cloethocarb, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, xylylcarb and triazamate.

Other suitable insect-repelling means are, for example: DDT, indoxacarb, nicotine, bensultap, catty, spinosad, camphechlor, chlordane, endosulfan, gamma-HCH, HCH, heptachlor, lindane, methoxychlor, acetoprole, ethiprole, fipronil, pyrafluprole, pyriprole, vaniliprole, avermectin, emamectin, emamectin-benzoate, ivermectin, milbemycin, diofenolan, epofenonane, fenoxycarb, hydroprene, kinoprene, methoprene, pyriproxifen, triprene, chromafenozide, halofenozide, methoxyfenozide, tebufenozide, bistrifluron, chlorfluazuron, diflubenzuron, fluazuron, flucycloxuron, flufenoxuron, hexaflumuron, lufenuron, novaluron, noviflumuron, penfluron, teflubenzuron, triflumuron, buprofezin, cyromazine, diafenthiuron, azocyclotin, cyhexatin, fenbutatin-oxide, chlorfenapyr, binapacyrl, dinobuton, dinocap, DNOC, fenazaquin, fenpyroximate, pyrimidifen, pyridaben, tebufenpyrad, tolfenpyrad, hydramethylnon, rotenone, acequinocyl, fluacrypyrim, spirodiclofen, spiromesifen, spirotetramat, 3-(2,5-dimethylphenyl)-8-methoxy-2-oxo-1-azaspiro[4.5]dec-3-and-4-yl ethyl carbonate (CAS-Reg.-Nr.: 382608-10-8), flonicamid, amitraz, propargite, flubendiamide, rynoxapyr, chloranthraniliprol, thiocyclam hydrogen oxalate, thiosultap-sodium, azadirachtin, aluminium phosphid, methylbromide, sulfurylfluoride, cryolite, flonicamid, pymetrozine, clofentezine, etoxazole, hexythiazox, amidoflumet, benclothiaz, benzoximate, bifenazate, bromopropylate, buprofezin, chinomethionat, chlordimeform, chloroberizilate, chloropicrin, clothiazoben, cycloprene, cyflumetofen, dicyclanil, fenoxacim, fentrifanil, flubenzimine, flufenerim, flutenzin, gossyplure, hydramethylnone, japonilure, metoxadiazone, petroleum, piperonylbutoxid, potassium oleat, pyridalyl, sulfluramid, tetradifon, tetrasul, triarathene and verbatin.

With the term "cellulose fibres" any fibre consisting of, or derived from, cellulose is meant. Suitable cellulose fibres include modified or unmodified cotton, viscose, rayon, linen, jute, hemp, cellulose acetate, cellulose triacetate, lyocell and combinations, derivatives or mixtures thereof.

With the term "synthetic fibres", any not naturally occurring fibre is meant. Suitable synthetic fibres include: polyester fibres (such as, for example, polyethylenetereftalate fibres, polypropylene tereftalate fibres, polytrimethylenetereftalate fibres, polybutylene tereftalate fibres and mixtures thereof), polyamide fibres (such as, for example, meta-aramide fibres, para-aramide fibres, nylon 6 fibres, nylon 6,6 fibres, nylon 4,6 fibres and nylon 12 fibres), polyvinylalcohol fibres and combinations, derivatives or mixtures thereof.

In a first aspect, the invention provides an insect-repelling textile product comprising: one or more cellulose extruded fibres comprising micro-fine dispersions of an insect-repelling means; and one or more cellulose fibres in an amount of at least 35% by weight with respect to the total weight of the textile product, and further one or more synthetic fibres comprising polyester fibres and/or polyamide fibres.

This offers as an advantage that an insect-repelling textile product is provided, with a pleasant touch and good printability. Good printability is particularly of great importance for army clothing, where camouflage patterns are often desired. Also provided is a textile product in which the washing out of the insect-repelling means is limited.

In a preferred embodiment, the cellulose fibres comprise flame-retarding cellulose fibres such as FR rayon, FR acetate, triacetate FR, viscose FR or FR lyocell. Although cellulose fibres are softer and less expensive than inherently flame-retarding fibres, they are not naturally resistant to flames. To increase the flame-retarding capability of these fibres, one or more flame retarders are often incorporated in the cellulose fibres. Such flame-retarding means can be processed by the addition of the flame retarders during spinning, by submersion in, or spraying of, the cellulose fibre with the flame retarder, or any other process in which the flame-retarding means is applied in or on cellulose fibre. There are a variety of such flame-retarding means on the market, among which, for example, certain phosphor compounds such as Sandolast 9000^{®}. Other suitable flame-retarding means include halogenated flame retarders (for example bromised or chlorated fire retarders), phosphor-based flame retarders, antimony-based flame retarders, nitrogen-containing flame retarders and combinations or mixtures thereof. Cellulose fibres containing one or more flame-retarding means are generally designated with "FR" for flame-retarding. Methods for making such flame-retarding cellulose fibres are generally described in US 5,417,752 and US 5,609,950, for example. In this way, a textile product with improved fire-retarding properties can be obtained.

The extruded cellulose fibers are heterogeneous fibres comprising a continuous phase of cellulose and a discontinuous phase comprising micro-fine dispersion of insect-repelling means. Examples thereof are bicomponent cellulose fibres with a cellulose wall and with one or more nuclei comprising said insect-repelling means. The person skilled in the art will understand that bicomponent fibres comprising a cellulose wall with therein a nucleus of insect-repelling material should also be understood under such a description. Such fibres are advantageous, because the insect-repelling means is better contained in said cellulose fibre, as opposed to, for example, systems in which the insect-repelling means is impregnated in a textile. Although it can be suspected that such fibres offer a strongly decreased emission of insect-repelling means, the inventors surprisingly found that a good insect-repelling activity of the textile product could still be guaranteed. Moreover the inventors surprisingly found that such fibres retain a good insect-repelling activity after a great number of washing events, such as apparent from inter alia Figure 4.

The present invention provides an insect-repelling textile product according to the first aspect of the invention in which said extruded cellulose fibres comprising an insect-repelling product are included in a textile matrix of synthetic fibres comprising polyester fibres, aliphatic and/or aromatic polyamide fibres, preferably in the preferred forms such as described below. Surprisingly, it turns out that the emission of insect-repelling means after the course of several washing events is more constant, whereby a pre-established quality of the textile product can be guaranteed over a longer duration of use of the textile product. This can inter alia be understood by the good mechanical protection by the synthetic fibres of the extruded cellulose fibres. A good mechanical protection prevents possible damage to the cellulose fibres, for example in demanding circumstances such as intense and/or repeated friction on the textile surface. Avoiding damage to the cellulose fibres prevents the leaching of insect-repelling means through micro rips in the cellulose wall. Aliphatic and/or aromatic polyamide fibres offer a high resistance to shearing forces and are therefore very advantageous for the protection of the cellulose fibre. Surprisingly, the inventors found that polyester also offers a very good protection of the cellulose fibres with insect-repelling means.

In a preferred embodiment, the synthetic fibres comprise inherent flame-retarding fibres such as aramid fibres, polybenzimidazole fibres, heat-resistant modacryl fibres, polysulphonamide fibres (for example, sulpho-aramid fibres), polyimide fibres, polyamide-imide fibres, polypyridobisimidazole fibres, polyoxadiazole fibres and partly oxidised or carbonised fibres. With the term "aramid fibre", any fibre composed of a long-chain polyamide, in which at least 85% of the amide bindings are directly bound to two aromatic rings, is meant. Suitable aramid fibres include meta-aramid fibres, para-aramid fibres (such as, for example, poly-p-phenylene terephthalamide fibres, also known as KEVLAR^{®}) and combinations, derivatives or mixtures thereof. In this way, a textile product with high mechanical strength, wear-resistance and improved fire-retarding properties can be obtained.

In a preferred embodiment, the present invention provides an insect-repelling textile product according to the first aspect of the invention, in which the cellulose fibres comprise viscose or cotton fibres. The presence of at least 30 percent by weight, preferably at least 40 percent by weight of viscose or cotton fibres contributes to the comfort of the textile material by, for example, improving the moisture-absorbing properties. In addition, viscose and cotton fibres have excellent printability.

In a preferred embodiment, the present invention provides an insect-repelling textile product according to the first aspect of the invention, in which the cellulose fibres comprise flame-retarding viscose (called viscose FR above). The use of flame-retarding viscose contributes to improved flame-retarding properties.

In a preferred embodiment, the present invention provides an insect-repelling textile product according to the first aspect of the invention, in which the amount of cellulose fibres lies between 35 and 70 percent by weight with respect to the total weight of the textile product. More preferably, said insect-repelling textile product contains between 40 and 65 percent by weight, and still more preferably between 40 and 60 percent by weight of cellulose fibres with respect to the total weight of the textile product. Most preferably, said insect-repelling textile product contains at least 40, 42, 44, 46, 48, 50, 52, 54, 56, 58 or 60 percent by weight of cellulose fibres with respect to the total weight of the textile product, or any amount therein between. Preferably the cellulose fibres comprise flame-retarding viscose. Lower concentrations of cellulose fibres lead to a textile product with mediocre or poor touch, while higher concentrations lead to limited mechanical strength and tear-resistance. The use of such amounts of cellulose fibres offers as an advantage that textile products with good moisture-absorbing properties, excellent printability and improved flame-retarding properties can be obtained.

In a preferred embodiment, the present invention provides an insect-repelling textile product according to the first aspect of the invention, in which the synthetic fibres comprise polyamide fibres. Suitable polyamide fibres for use in said insect-repelling textile product include meta-aramide fibres, para-aramide fibres, nylon 6 fibres, nylon 6,6 fibres, nylon 4,6 fibres and nylon 12 fibres and combinations, derivatives or mixtures thereof. In this way, a textile product with increased durability and resistance to tear is obtained. The use of polyamide fibres therefore also contributes to an increased resistance to abrasive environments, such as, for example, in industrial laundries.

In a preferred embodiment, the present invention provides an insect-repelling textile product according to the first aspect of the invention, in which the polyamide fibres comprise aliphatic and aromatic polyamide fibres. Suitable aliphatic polyamide fibres for use in said insect-repelling textile product include nylon 6 fibres, nylon 6,6 fibres, nylon 4,6 fibres and nylon 12 fibres and combinations, derivatives or mixtures thereof. Aromatic polyamides, or aramids, include any fibre composed of a long-chain polyamide in which at least 85% of the amide bindings are directly bound to two aromatic rings. Suitable aramid fibres for use in said insect-repelling textile product include meta-aramid fibres, para-aramid fibres and combinations, derivatives or mixtures thereof. The use of such polyamide fibres allows textile products with excellent mechanical properties to be provided.

In a preferred embodiment, the present invention provides an insect-repelling textile product according to the first aspect of the invention, in which the aliphatic polyamide fibres comprise flame-retarding polyamides. To increase the flame-retarding capability of these fibres, one or more flame retarders are often incorporated in the aliphatic polyamide fibres. Such flame-retarding means can be processed by the addition of the flame retarders during spinning, by submersion in or spraying with the flame retarder, or any other process in which the flame-retarding means is brought into or onto the fibre. Preferably, nylon 6,6 FR is used as aliphatic polyamide. The use of such aliphatic polyamide fibres contributes to increased strength and improved flame resistance of the textile product obtained.

In a preferred embodiment, the present invention provides an insect-repelling textile product according to the first aspect of the invention, in which
- the amount of aliphatic polyamide fibres lies between 1 and 25 percent by weight with respect to the total weight of the textile product, preferably between 5 and 15 percent by weight, more preferably between 6 and 12 percent by weight, still more preferably between 7 and 10 percent by weight, and most preferably 7, 8 or 9 percent by weight, or an amount therein between, and
- the amount of aromatic polyamide fibres lies between 20 and 50 percent by weight with respect to the total weight of the textile product, preferably between 30 and 40 percent by weight, more preferably between 32 and 38 percent by weight, still more preferably between 33 and 37 percent by weight, and most preferably 33, 34, 35, 36 or 37 percent by weight, or an amount therein between.

Such amounts of aliphatic and aromatic polyamides allow a textile product with good tear-resistance, mechanical strength and flame-retarding properties to be provided, without excessive loss of the insect-repelling properties, the breathable character, the pleasant touch and the printability of the textile product.

In a preferred embodiment, the present invention provides an insect-repelling textile product according to the first aspect of the invention, in which the aromatic polyamide fibres comprise meta-aramide and para-aramide fibres. Preferably, the insect-repelling textile product contains, besides meta-aramide, a small amount of para-aramid fibres. The combination of meta-aramide and para-aramide fibres allows a textile product with inter alia an increased flame resistance, decreased thermal shrinkage, high chemical resistance and good mechanical strength to be provided.

In a preferred embodiment, the present invention provides an insect-repelling textile product according to the first aspect of the invention, in which the ratio of meta-aramide/para-aramide fibres lies between 1.0 and 5.0, preferably between 1.5 and 3.5, more preferably between 1.8 and 3.2, still more preferably between 2.1 and 2.9, and the most preferably between 2.3 and 2.7. Such a ratio of meta-aramide/para-aramide fibres allows a textile product with optimal flame resistance, thermal shrinkage, chemical resistance and mechanical strength to be provided for a certain amount of aromatic polyamide fibres present in the textile product.

In a preferred embodiment, the present invention provides an insect-repelling textile product according to the first aspect of the invention, in which
- the amount meta-aramide fibres lies between 5 and 50 percent by weight with respect to the total weight of the textile product, preferably between 10 and 40 percent by weight, more preferably between 15 and 35 percent by weight, still more preferably between 20 and 30 percent by weight, and most preferably 20, 21, 22, 23, 24, 25, 26, 27, 28, 29 or 30 percent by weight, or an amount therein between, and
- the amount of aromatic para-aramide fibres lies between 1 and 30 percent by weight with respect to the total weight of the textile product, preferably between 2 and 25 percent by weight, more preferably between 3 and 20 percent by weight, still more preferably between 5 and 15 percent by weight, and most preferably 5, 6, 7, 8, 9, 10, 11, 12, 13, 14, or 15 percent by weight, or an amount therein between.

The processing of meta-aramide and para-aramide fibres in said amounts allows a textile product with optimal flame resistance, thermal shrinkage, chemical resistance and mechanical strength to be provided, without excessive loss of the insect-repelling properties, the breathable character, the pleasant touch and the printability of the textile product.

In a preferred embodiment, the present invention provides an insect-repelling textile product according to the first aspect of the invention, in which the textile product comprises an antistatic fibre. The antistatic fibres can be any suitable fibre that helps to dissipate or inhibit the accumulation of a static charge in said textile products. Suitable antistatic fibres for use in said insect-repelling textile product include various types of core conductors and surface conductors, carbon fibres such as the P140 antistatic carbon fibre (DuPont) and polyester or nylon fibres containing metal particles such as, for example, Beltron White. In this way, a textile product can be provided which does not accumulate static charge, which does not clamp itself to the body by static charge and does not attract dust particles. In addition, the presence of antistatic fibres prevents the occurrence of discharges which can cause sparks. Said sparks, after all, can in turn give rise to explosions in certain environments.

In a preferred embodiment, the present invention provides an insect-repelling textile product according to the first aspect of the invention, in which the amount of antistatic fibre lies between 0.5 and 5.0 percent by weight with respect to the total weight of the textile product, preferably between 1.0 and 3.0 percent by weight. More preferably, said insect-repelling textile product contains between 1.3 and 2.7 percent by weight, and still more preferably between 1.5 and 2.5 percent by weight of antistatic fibres with respect to the total weight of the textile product. Most preferably, said insect-repelling textile product contains between 1.8 and 2.2 percent by weight of antistatic fibres with respect to the total weight of the textile product. Such an amount of antistatic fibres allow a textile product with good antistatic properties to be provided without therewith compromising the flame-retarding character, the mechanical strength, printability or the insect-repelling character of the textile product.

In a preferred embodiment, the present invention provides an insect-repelling textile product according to the first aspect of the invention, in which the amount insect-repelling means lies between 0.25 and 5.00 percent by weight with respect to the total weight of the textile product, preferably between 0.50 and 2.00 percent by weight. More preferably, said insect-repelling textile product contains between 0.75 and 1.50 percent by weight, and still more preferably between 0.90 and 1.40 percent by weight of insect-repelling means with respect to the total weight of the textile product. Most preferably, said insect-repelling textile product contains between 1.00 and 1.30 percent by weight of insect-repelling means with respect to the total weight of the textile product. Such amounts of insect-repelling means lead to sufficient biological activity against, for example, mosquitoes. In this way, textile products can be provided which, both after production as well as after 100 washing events, comply with the strict German TL 8305-0331 standard.

In a preferred embodiment, the present invention provides an insect-repelling textile product according to the first aspect of the invention, in which the insect-repelling means is chosen from the group consisting of permethrine, pyrethrin, icaridin, cyfluthrine, deltamethrine, pyrethroids and mixtures thereof. Preferably permethrine is used as insect-repelling means. The use of these insect-repelling means, in the concentrations described above, leads to sufficient biological activity.

In a preferred embodiment, the present invention provides an insect-repelling textile product according to the first aspect of the invention, in which said fibre comprising an insect-repelling means, comprises a cellulose-extruded fibre. Such cellulose-extruded fibre can inter alia be prepared by dissolving cellulose in a suitable solvent, admixing a non-polar organic material, such as, for example, an insect-repelling means, and increasing the viscosity of the non-polar organic material, leading to a dispersed phase. Subsequently, plate-shaped and/or elongated nano particles are added, such as, for example, layered silicates and bentonites, which subsequently envelope the dispersed phase. The use of a cellulose fibre comprising an insect-repelling means allows the total cellulose fibre content to be maximised, without therewith comprising the insect-repelling, anti-static, flame-retarding and mechanical properties of the textile product. In addition, such a textile product with a high concentration of cellulose fibres has a good printability and breathable character.

In a preferred embodiment, the present invention provides an insect-repelling textile product according to the first aspect of the invention, in which said fibre comprising an insect-repelling means, comprises an extruded fibre on the basis of naturally or synthetically produced polysaccharides. Suitable polysaccharides include wood, cellulose, starch, jute, flax, cotton, chitosan and mixtures thereof. The production of such extruded fibres can be carried out such as described above. A preferred embodiment of this procedure is described extensively in US 2016/0152803.

The present invention provides an insect-repelling textile product according to the first aspect of the invention, in which said cellulose-extruded fibre comprises micro-fine dispersions of the insect-repelling means. Such micro-fine dispersions can assume all forms and shapes such as known by the person skilled in the art, and occur as inclusions in the fibre. The presence of these inclusions leads to the delayed release of the components in said dispersions. In this way, textile products can be provided which, both after production as well as after 100 washing events, comply with the strict German TL 8305-0331 standard, without exposing the user to high concentrations of insect-repelling means. In a most preferred embodiment, the insect-repelling means comprises permethrine.

In a preferred embodiment, the present invention provides an insect-repelling textile product according to the first aspect of the invention, in which said fibre comprising an insect-repelling means, comprises a cellulose-extruded fibre, in which
- the amount of cellulose amounts to at least 30 percent by weight with respect to the total weight of the fibre, preferably at least 50 percent by weight, more preferably at least 55 percent by weight, still more preferably at least 60 percent by weight, and most preferably at least 61 percent by weight, and
- the amount of permethrine lies between 1 and 30 percent by weight with respect to the total weight of the fibre, preferably between 3 and 20 percent by weight, more preferably between 4 and 17 percent by weight, still more preferably between 6 and 14 percent by weight, and most preferably 6, 7, 8, 9, 10, 11, 12, 13 or 14 percent by weight, or an amount therein between, and
- the amount of paraffine lies between 1 and 30 percent by weight with respect to the total weight of the fibre, preferably between 5 and 25 percent by weight, more preferably between 10 and 20 percent by weight, still more preferably between 11 and 19 percent by weight, and most preferably 11, 12, 13, 14, 15, 16, 17, 18 or 19 percent by weight, or an amount therein between, and
- the amount of organically modified minerals lies between 1 and 20 percent by weight with respect to the total weight of the fibre, preferably between 2 and 15 percent by weight, more preferably between 3 and 10 percent by weight, still more preferably between 3 and 8 percent by weight, and most preferably 3, 4, 5, 6, 7 or 8 percent by weight, or an amount therein between.

By this specific composition, a particularly stable fibre is obtained, with delayed release of permethrine. Hereby textile products can be provided which, both after production as well as after 100 washing events, comply with the strict German TL 8305-0331 standard, without exposing the user to high concentrations of permethrine.

In a preferred embodiment, the present invention provides an insect-repelling textile product according to the first aspect of the invention, in which the specific volume of said cellulose-extruded fibre lies between 0.30 and 1.00 cm³/g, preferably between 0.40 and 0.90 cm³/g, more preferably between 0.45 and 0.80 cm³/g, still more preferably between 0.55 and 0.70 cm³/g, and most preferably 0.55, 0.57, 0.59, 0.61, 0.63, 0.65, 0.67, 0.69 or 0.70 cm³/g, or a specific volume therein between. Such specific volume leads to a fibre product that is well processable in yarns.

In a preferred embodiment, the present invention provides an insect-repelling textile product according to the first aspect of the invention, in which the fibre density of said cellulose-extruded fibre lies between 1.0 and 5.0 dtex, preferably between 1.5 and 3.5 dtex more preferably between 1.8 and 3.0 dtex, still more preferably between 2.0 and 2.7 dtex, and most preferably 2.0, 2.1, 2.2, 2.3, 2.4, 2.5, 2.6 or 2.7 dtex, or a fibre density therein between. Such fibre density allows a high-quality yarn to be provided.

In a preferred embodiment, the present invention provides an insect-repelling textile product according to the first aspect of the invention, in which the fibre diameter of said cellulose-extruded fibre lies between 1 and 50 µm, preferably between 5 and 30 µm more preferably between 6 and 25 µm, still more preferably between 8 and 20 µm, and most preferably 8, 9, 10, 11, 12, 13, 14, 15, 16, 17, 18, 19 or 20 µm, or a fibre diameter therein between. This offers as an advantage that a great part of the insect-repelling means is not present on the surface of the fibre. Consequently, this can only be released by diffusion, and thus delayed. In this way, a textile product with protracted release of insect-repelling means can be obtained without exposing the wearer to high concentrations of insect-repelling means.

In a preferred embodiment, the present invention provides an insect-repelling textile product according to the first aspect of the invention, in which the specific fibre area of said cellulose-extruded fibre lies between 1000 and 3000 cm²/g, preferably between 1500 and 2500 cm²/g, more preferably between 1600 and 2400 cm²/g, still more preferably between 1800 and 2200 cm²/g, and most preferably between 1900 and 2000 cm²/g.

Only the permethrine on the surface of the fibre with a layer thickness of approximately 1 µm is accessible, which means that only approximately a fourth of the total amount of permethrine is available. By the homogeneous distribution over the whole cross section of the fibre, approximately three fourths of the active substance is stored as a reservoir, and can consequently only be used for diffusion to the surface of the fibre. This results in a delayed release of permethrine, and prevents exposure of the user to high concentrations of permethrine.

In a preferred embodiment, the present invention provides an insect-repelling textile product according to the first aspect of the invention, in which the amount of said fibre comprising an insect-repelling means lies between 1 and 30 percent by weight with respect to the total weight of the insect-repelling textile product, preferably between 5 and 25 percent by weight, more preferably between 5 and 20 percent by weight, still more preferably between 10 and 15 percent by weight, and most preferably 10, 11, 12, 13, 14 or 15 percent by weight, or an amount therein between. The use of such amounts of insect-repelling means comprising fibres allows a product with excellent protracted insect-repelling properties to be provided.

In a preferred embodiment, the present invention provides an insect-repelling textile product according to the first aspect of the invention, in which the textile product is a fabric. Although the present invention also inter alia comprises knitwear, crocheting and nonwoven or a multi-layer textile products, fabrics are preferred because of their versatility and excellent strength. In this regard, the yarns can be combined according to any pattern whatsoever, as long as a textile product is obtained. Preferably a first number of yarns (the chain) is disposed in a first direction, and a second number of yarns (the weft) is disposed in a second direction perpendicular to the first direction. Possible weaving patterns include the plain weave, basket weave, twill weave, chevron, sateen weave or derivatives and combinations hereof. Suitable twill weaves include plain twills, interrupted twills, broken twills, woven cross twills and screw twills. Suitable weaving patterns include 2/1, 3/1, 3/2, 4/1, 1/2, 1/3 or 1/4 twills or chevrons.

In a preferred embodiment, the present invention provides an insect-repelling textile product according to the first aspect of the invention, in which the yarns are arranged in a pattern, in which one of the threads is substantially present on one surface of the textile product. In other words, one surface of the textile material is substantially formed by the chain or the weft. Suitable patterns or constructions which provide such textile material include sateen weaves, twill weaves and chevron weaves, in which the upper side of the fabric in particular can consist of the chain or the weft. The advantage of such a construction lies in the great mechanical strength of the fabrics. In addition, upon the use of more types of yarn, a certain type of yarn can be preferentially provided on one side of the fabric.

In a preferred embodiment, the present invention provides an insect-repelling textile product according to the first aspect of the invention, in which the yarn for the chain and the weft are used singly or doubly, and the ratio single/double lies between 5 and 50, preferably between 6 and 30. More preferably, the ratio single/double lies between 6 and 20, and still more preferably between 7 and 15. Most preferably, the ratio single/double is 7, 8, 9, 10, 11, 12, 13, 14, or 15, or any ratio therein between. In this way, an insect-repelling textile product with "ripstop" can be provided, which results in a greater tear-resistance of the textile product. Besides the periodically weaving in of a double chain or weft thread of the same type, another type of yarn can also be used, such as, for example, yarns comprising aramide. In this way, a textile product with additional tear-resistance can be provided.

In a preferred embodiment, the present invention provides an insect-repelling textile product according to the first aspect of the invention, in which the yarn for the chain is used in multiples, for example twofold, threefold, fourfold, fivefold or sixfold, and the ratio single/multiple lies between 1 and 50, preferably between 2 and 30. More preferably, the ratio single/multiple lies between 3 and 20, and still more preferably between 3 and 10. Most preferably, the ratio single/multiple is 3, 4, 5, 6, 7 or 8, or any ratio therein between. In this way, an insect-repelling textile product with "ripstop" can be provided, which results in a greater tear-resistance of the textile product. Besides the periodically weaving in of a multiple chain or weft thread of the same type, another type of yarn can also be used, such as, for example, yarns comprising aramide. In this way, a textile product with additional tear-resistance can be provided.

In a preferred embodiment, the present invention provides an insect-repelling textile product according to the first aspect of the invention, in which the yarn for the weft is used in multiples, for example twofold, threefold, fourfold, fivefold or sixfold, and the ratio single/multiple lies between 1 and 50, preferably between 2 and 30. More preferably, the ratio single/multiple lies between 3 and 20, and still more preferably between 3 and 10. Most preferably, the ratio single/multiple is 3, 4, 5, 6, 7 or 8, or any ratio therein between. In this way, an insect-repelling textile product with "ripstop" can be provided which results in a greater tear-resistance of the textile product. Besides the periodically weaving in of a multiple chain or weft thread of the same type, another type of yarn can also be used, such as, for example, yarns comprising aramide. In this way, a textile product with additional tear-resistance can be provided.

In a preferred embodiment, the present invention provides an insect-repelling textile product according to the first aspect of the invention, in which the chain and the weft are composed of the same yarn. With the term "yarn", a set of fibres, woven or intertwined to form a continuous strand, which inter alia can be used in weaving, knitting, braiding or can be processed in any other way into a textile product, is meant. The use of only one type of yarn allows a textile product with homogeneous properties through the whole material to be provided.

In a preferred embodiment, the present invention provides an insect-repelling textile product according to the first aspect of the invention, in which the textile product is further treated with a flame-retarding means, and this on at least one surface of the textile product. Suitable flame-retarding means include halogenated flame retarders, such as, for example, brominated or chlorated fire retarders, phosphor-based flame retarders, such as, for example, tetrahydroxymethyl phosphonium salt, antimony-based flame retarders, nitrogen-containing flame retarders and derivatives, combinations or mixtures thereof. This has as an advantage that the flame-retarding properties of said textile product can be further improved.

In a preferred embodiment, the present invention provides an insect-repelling textile product according to the first aspect of the invention, in which the textile product is printed with a camouflage pattern. This offers as an advantage that a textile product that is less conspicuous in a certain environment can be provided. Textile products with such patterns are particularly useful for military purposes, where the user of the textile material is often preferably not noticed. For the same reasons, clothing with such patterns is often also the preference of forestry workers or hikers.

In a preferred embodiment, the present invention provides an insect-repelling textile product according to the first aspect of the invention, in which the textile product is further provided with a water-repelling coating. Said water-repelling coating can consist of any component which leads to the repelling of water on the surface of the textile product. The repelling of water can be achieved, for example, by the lowering of the surface tension of the textile product. Suitable water-repelling components include fluorocarbons such as, for example, C4, C6, C8, C10, C12, C14 fluorocarbon, fluoro-urethanes, fluorocarbon resins, fluoropolymer emulsions, perfluoropolyethers, water-repelling resins and all derivatives, combinations or mixtures thereof.

In a second aspect the present invention provides a yarn comprising:
- an amount of flame-retarding or non-flame-retarding cellulose fibres lying between 35 and 60 percent by weight with respect to the total weight of the yarn, preferably between 36 and 60 percent by weight, still more preferably between 38 and 60 percent by weight, and most preferably 38, 40, 42, 44, 46, 48, 50, 52, 54, 56, 58 or 60 percent by weight, or an amount therein between, and
- an amount of meta-aramide fibres lying between 5 and 50 percent by weight with respect to the total weight of the yarn, preferably between 10 and 40 percent by weight, more preferably between 15 and 35 percent by weight, still more preferably between 20 and 30 percent by weight, and most preferably 20, 21, 22, 23, 24, 25, 26, 27, 28, 29 or 30 percent by weight, or an amount therein between, and
- an amount of para-aramide fibres lying between 1 and 30 percent by weight with respect to the total weight of the yarn, preferably between 3 and 20 percent by weight, more preferably between 4 and 17 percent by weight, still more preferably between 5 and 15 percent by weight, and most preferably 5, 6, 7, 8, 9, 10, 11, 12, 13, 14 or 15 percent by weight, or an amount therein between, and
- an amount fibre comprising an insect-repelling means lying between 1 and 30 percent by weight with respect to the total weight of the yarn, preferably between 3 and 20 percent by weight, more preferably between 4 and 20 percent by weight, still more preferably between 5 and 17 percent by weight, and most preferably 5, 6, 7, 8, 9, 10, 11, 12, 13, 14, 15, 16 or 17 percent by weight, or an amount therein between.

This composition allows a yarn to be provided having good flame-retarding properties, excellent mechanical strength, good printability and a protracted insect-repelling character.

In a preferred embodiment, the present invention provides an insect-repelling yarn according to the second aspect of the invention, in which said yarn comprises an amount of flame-retarding or non-flame-retarding aliphatic polyamide lying between 1 and 30 percent by weight with respect to the total weight of the yarn, preferably between 2 and 20 percent by weight, more preferably between 3 and 17 percent by weight, still more preferably between 4 and 15 percent by weight, and most preferably 4, 5, 6, 7, 8, 9, 10, 11, 12, 13, 14 or 15 percent by weight, or an amount therein between. The presence of flame-retarding aliphatic polyamide fibres contributes to an increased flame resistance. In addition, the use of this fibre reduces the price in comparison with aramide fibres.

In a preferred embodiment, the present invention provides an insect-repelling yarn according to the second aspect of the invention, in which said yarn comprises an amount of antistatic fibre lying between 0.5 and 5.0 percent by weight with respect to the total weight of the yarn, preferably between 1.0 and 3.0 percent by weight, more preferably between 1.3 and 2.7 percent by weight, still more preferably between 1.5 and 2.5 percent by weight, and most preferably 1.5, 1.6, 1.7, 1.8, 1.9, 2.0, 2.1, 2.2, 2.3, 2.4 or 2.5 percent by weight, or an amount therein between. Such an amount of anti-static fibres allows a yarn with good anti-static properties to be provided, without in that regard comprising the flame-retarding character, the mechanical strength, printability or the insect-repelling character of the yarn.

In a third aspect, the invention provides a method for obtaining an insect-repelling textile product according to the first aspect of the invention, comprising the steps of:
- forming a fibre mixture comprising at least a cellulose extruded fibres comprising micro-fine dispersions of an insect-repelling means, a synthetic fibre and at least 35 percent by weight of cellulose fibres,
- spinning of the fibre mixture into a yarn, and
- the weaving of the yarn into a fabric.

The production of yarns can inter alia be realised via common methods for spinning of staple-fibres to yarns, such as, for example, ring spinning. Alternatively, high airspeed spinning techniques such as, for example, Murata air-jet spinning, in which air is used to twist the staple-fibres into a yarn, can also be applied. Possible compositions of the fibre mixture are described extensively above, as well as various possible weaving patterns. In this way, a textile material with good printability, tear-resistance, flame-retarding and insect-repelling properties can provided that is also breathable and well printable.

In a preferred embodiment, the present invention provides a method according to the third aspect of the invention, in which said insect-repelling textile product is treated with a water-repelling product. Suitable water-repelling products are described above. Possible embodiments of the treatment comprise submersion in a bath in which both sides of the textile product are treated, and techniques in which only one side of said textile products is treated, such as, for example, making use of foam, sprayers or a lick roller. Said treatments can be followed or not followed by a drying step. In this way, a textile product with excellent water-repelling properties can provided.

In a fourth aspect, the invention provides a garment comprising an insect-repelling textile product according to the first aspect of the invention, or an insect-repelling yarn according to the second aspect of the invention. Said garments can be any garment imaginable and include trousers, singlets, shirts, body-warmers, coats, overalls, hats, uniforms such as, for example, military uniforms, sleeves, aprons, caps, hair bands, wristlets, leg pieces, gloves, face masks, shoes and socks. This offers as an advantage that tear-resistant garments are provided with inter alia a pleasant touch, flame-retarding properties and excellent insect-repelling activity, without the bearer being exposed to high concentrations of insect-repelling means. In that which follows, the invention is described on the basis of non-limiting examples which illustrate the invention, and which are not intended, or should not be interpreted, as limiting the scope of the invention.

### EXAMPLE

This example describes a preferred form for the production of an insect-repelling textile. In a first phase, a fibre mixture was formed containing 42.5 percent by weight of viscose FR, 25 percent by weight of meta-aramide, 10 percent by weight of para-aramide, 8 percent by weight of polyamide 6.6 FR, 2 percent by weight of antistatic fibre, for example Beltron White, and 12.5 percent by weight of an insect-repelling means containing fibre. Said fibre containing an insect-repelling means is a heterogeneous fibre comprising a continuous phase of cellulose and a discontinuous phase comprising one or more nuclei comprising permethrine. By the enclosure of the insect-repelling permethrine dispersion inside the cellulose wall, a more constant, gradual emission of permethrine is realised, and the insect-repelling activity of the fibre is guaranteed over a greater number of washing events. By enclosing the cellulose fibre inside an amount of polyamide fibres, it was achieved that damage, e.g. micro tears in the wall, to the cellulose fibre could be suppressed. In this way it was avoided that a micro tear reaches the discontinuous phase of insect-repelling means and a leaching-out of the insect-repelling means is caused. This in turn ensures a good insect-repelling activity over a longer period of use, particularly when such use entails intensive mechanical contact on the textile. Subsequently, this fibre mixture was woven to yarn with Nm 50, after which two threads were intertwined to either Nm 50/2 or dTex 400. The yarn obtained hereby was woven according to a chevron 3/1 pattern, in which both for the chain and the weft a ratio of 12 single (400 dTex), 1 double (800 dTex) was maintained. Subsequently, the fabric obtained was printed and treated with a C8 fluorocarbon.

Figure 1 shows the front side of such an insect-repelling fabric with camouflage pattern 1, composed of a chain 2 and weft 3. This combination illustrates a preferred form of the present invention.

Figure 2 shows a detail of the front side of such an insect-repelling fabric, composed of a chain 2 and weft 3. In this preferred form, the fabric periodically comprises a double weft 5 and a double chain 4 thread.

Figure 3 is a simplified representation of a detail of the rear side of such an insect-repelling fabric, composed of a chain 2 and weft 3. In a preferred form, the fabric comprises a double weft 5 every 12 wefts, and the chain comprises a double chain 4 thread every 12 threads. Such a pattern results in an increased resistance to tear of the fabric.

The textile product obtained has a flame-retarding effect according to ISO15025 (method A - surface ignition and method B - edge ignition), and is water-repelling according to ISO4920-2012 ISO5. In addition, the textile product obtained complies with the following ISO standards with regard to colour fastness: chlorine according to ISO 105-E03 2010, dry-cleaning according to ISO 105-X05 1994 and ISO 105-D01 2010, light according to ISO 105-B02 2014, ironing according to ISO 105-X11 1994, washing according to ISO 105-C06 2010 and ISO 105-C08 2010, water according to ISO 105-E01 2013, dry and wet rubbing according to ISO 105-X12 2016, sea water according to ISO 105-E02 2013, breathing according to ISO 105-E04 2013 with multi-fibre, acid according to ISO 105-E05 2010, alkaline according to ISO 105-E06 2006 and water spotting according to ISO 105-E07 2010. In addition, the textile product also complies with NEN 8333, which describes requirements for clothing which helps to protect against ticks. This standard applies for all types of clothing factory-treated with permethrine with the objective of helping to protect the user against ticks. By preventing ticks from biting, Lyme disease and other diseases transferable by ticks are prevented. The standard relates to clothing which helps to offer protection against all life stages of the most common tick in Europe, the sheep tick (*Ixodes ricinus*).

Subsequently, for the textile product obtained, the total amount of permethrine present as a function of the number of washing events was determined, and compared with a permethrine-impregnated textile. To this end, an extraction method with methanol as solvent under high pressure was applied. The applied method results in accelerated extraction of solid constituents such as permethrine in solid and semisolid samples, such as textile. The amount of permethrine present in the various samples was determined with the aid of high-pressure liquid chromatography (HPLC).

Figure 4 shows the concentration course of permethrine (expressed in mg/m²) as a function of the number of washing events for a permethrine-impregnated textile 6, and a fabric comprising a permethrine-containing fibre 7, such as described in the preferred form mentioned above. After 100 washing events, the permethrine concentration of the impregnated textile 6 decreased from more than 1200 mg/m² to 420 mg/m². However, the concentration in the fabric comprising a permethrine-containing fibre 7, still amounts to more than 575 mg/m² after 100 washing events, which according to the WHO tube test (document WHO/CDS/MAU98.12.) should lead to sufficient bio-activity.

This test clearly shows that the amount of residual permethrine after 100 washing events is higher for the textile considered, comprising a permethrine-containing fibre, in comparison with a permethrine-impregnated textile. In this regard, it can also be remarked that the permethrine-impregnated textile nevertheless contained a higher concentration of permethrine before the washing events.

Subsequently, the bio-activity of the fabric of example 1 was evaluated. To this end, the bio-activity was determined immediately after production and after 100 washing events, as described in the German TL 8305-0331 standard. The tests were carried out in standard WHO tubes with yellow-fever mosquitoes (*Aedes aegypti*) and ticks (*Ixodes ricinus*), according to the specifications of the German TL 8305-0331 standard. The textile sample was fixed to the inner walls of standard WHO tubes, after which 10 test insects were brought in, whereby they were exposed to the textile. The time to the succumbing of the first, fifth and tenth mosquito was subsequently registered. For each sample, 3 repetitions were carried out (Tables 1 and 2).

**Table 1: Bio-activity of fabric comprising a permethrine-containing fibre according to TL 8305-0331 (Aedes aegypti).**

| Sample | 1 succumbed mosquito | 5 succumbed mosquitoes | 10 succumbed mosquitoes |
|---|---|---|---|
| After | 00:27:08 ± 00:01 :35 | 00:35:37 ± 00:00:55 | 00:59:00 ± 00:01:54 |
| After 100 washing events | 00:29:28 ± 00:03:26 | 00: 39:32 ± 00:00:10 | 00:59:50 ± 00:01:06 |

During the testing of the fabric after production, the first mosquito succumbed after an average of 27 minutes and 8 sec, and all mosquitoes succumbed after an average of 59 minutes. After 100 washing events, the first mosquito succumbed after an average of 29 minutes and 28 seconds, while all mosquitoes succumbed after an average of 59 minutes and 50 seconds. The German TL 8305-0331 standard prescribes that all mosquitoes must succumb within a period of 1 hour 11 minutes and 30 seconds after exposure to the textile product that has been washed 100 times. Consequently, this experiment shows clearly that the textile product obtained complies with the strict TL 8305-0331 standard with regard to *Aedes aegypti.*

**Table 2: Bio-activity of fabric comprising a permethrine-containing fibre according to TL 8305-0331 (Ixodes ricinus).**

| Sample | 10 succumbed ticks |
|---|---|
| | Time (in hh:mm:ss) |
| After production | 00:22:56 ± 00:02:10 |
| After 100 washing events | 00:22:22 ± 00:04:22 |

During the testing of the fabric after production, all ticks succumbed after an average of 22 minutes and 56 seconds. After 100 washing events, all ticks succumbed after an average of 22 minutes and 22 seconds. The German TL 8305-0331 standard prescribes that all ticks must succumb within a period of 27 minutes and 6 seconds after exposure to the textile product that has been washed 100 times. Consequently, this experiment shows clearly that the textile product obtained complies with the strict TL 8305-0331 standard with regard to *Ixodes ricinus.*

## Claims

1. An insect-repelling textile product comprising:
- at least one or more cellulose fibres,
and
- one or more cellulose-extruded fibres comprising an insect-repelling means,
in which said cellulose fibres are comprised in an amount of minimally 35% by weight with respect to the total weight of the textile product, wherein said cellulose-extruded fibre comprises micro-fine dispersions of the insect-repelling means, **characterized in that** the insect-repelling textile product further comprises one or more synthetic fibres, in which said synthetic fibres comprise polyester fibres and/or polyamide fibres.

2. Insect-repelling textile product according to claim 1, in which said cellulose-extruded fibres are heterogeneous fibres comprising a continuous phase of cellulose and a discontinuous phase comprising insect-repelling means.

3. Insect-repelling textile product according to claim 1 or 2, in which the cellulose fibres comprise cotton, viscose or flame-retarding viscose fibres.

4. Insect-repelling textile product according to at least one of claims 1 to 3, in which the amount of cellulose fibres lies between 35 and 75% by weight with respect to the total weight of the textile product, preferably between 40 and 60% by weight.

5. Insect-repelling textile product according to at least one of claims 1 to 4, in which said synthetic fibres comprise polyamide fibres and in which the polyamide fibres comprise aliphatic and aromatic polyamide fibres.

6. Insect-repelling textile product according to claim 5, in which
- the amount of aliphatic polyamide fibres lies between 1 and 25% by weight with respect to the total weight of the textile product, preferably between 5 and 15% by weight, and
- the amount of aromatic polyamide fibres lies between 20 and 50% by weight with respect to the total weight of the textile product, preferably between 30 and 40% by weight.

7. Insect-repelling textile product according to at least one of claims 1 to 6, in which the amount of insect-repelling means lies between 0.25 and 5.00% by weight with respect to the total weight of the textile product, preferably between 0.50 and 2.00% by weight.

8. Insect-repelling textile product according to claim 7, in which the insect-repelling means is chosen from the group consisting of permethrine, pyrethrin, icaridin, cyfluthrine, deltamethrine, pyrethroids and mixtures thereof.

9. Insect-repelling textile product according to at least one of claims 1 to 8, in which the textile product is a fabric.

10. Insect-repelling yarn comprising:
- an amount of cellulose fibres lying between 35 and 60% by weight with respect to the total weight of the yarn, and
- an amount of fibre comprising an insect-repelling means lying between 1 and 30% by weight with respect to the total weight of the yarn, preferably between 3 and 20% by weight, wherein said fibre comprising an insect-repelling means is a cellulose-extruded fibre comprising micro-fine dispersions of the insect-repelling means,
**characterized in that,** the insect-repelling yarn further comprises an amount meta-aramide fibres lying between 5 and 50% by weight with respect to the total weight of the yarn, preferably between 10 and 40% by weight, and an amount of para-aramide fibres lying between 1 and 30% by weight with respect to the total weight of the yarn, preferably between 3 and 20% by weight.

11. Insect-repelling yarn according to claim 10, in which said cellulose fibres are extruded bicomponent fibres with a cellulose wall and with a nucleus comprising said dispersion of said insect-repelling means.

12. Insect-repelling yarn according to claim 10 or 11, in which the yarn comprises an amount of aliphatic polyamide lying between 1 and 30% by weight with respect to the total weight of the yarn, preferably between 2 and 20% by weight.

13. Method for the production of an insect-repelling textile product according to at least one of claims 1 to 9 comprising the steps of:
- forming a fibre mixture comprising at least a cellulose-extruded fibre comprising micro-fine dispersions of an insect-repelling means, a synthetic fibre and at least 35% by weight of cellulose fibres, in which said synthetic fibres comprise polyester fibres and/or polyamide fibres,
- spinning of the fibre mixture into a yarn, and
- the weaving of the yarn into a fabric.

14. Garment comprising an insect-repelling textile product according to one of claims 1 to 9 or insect-repelling yarn according to one of claims 10 to 12.

## Patentansprüche

1. Insektenabwehrendes Textilprodukt, Folgendes umfassend:
mindestens eine oder mehrere Zellulosefasern und eine oder mehrere Zellulose-extrudierte Fasern, die ein Insektenabwehrmittel umfassen,
wobei die Zellulosefasern in einer Menge von mindestens 35 Gew.-%, bezogen auf das Gesamtgewicht des Textilprodukts, enthalten sind, wobei die extrudierte Zellulosefaser mikrofeine Dispersionen des Insektenabwehrmittels umfasst, **dadurch gekennzeichnet, dass** das insektenabwehrende Textilprodukt ferner eine oder mehrere synthetische Fasern umfasst, wobei die synthetischen Fasern Polyesterfasern und/oder Polyamidfasern umfassen.

2. Insektenabwehrendes Textilprodukt nach Anspruch 1, wobei die extrudierten Zellulosefasern heterogene Fasern sind, die eine kontinuierliche Phase aus Zellulose und eine diskontinuierliche Phase umfassen, die Insektenabwehrmittel umfasst.

3. Insektenabwehrendes Textilprodukt nach Anspruch 1 oder 2, wobei die Zellulosefasern Baumwolle, Viskose oder flammhemmende Viskosefasern umfassen.

4. Insektenabwehrendes Textilprodukt nach mindestens einem der Ansprüche 1 bis 3, wobei die Menge der Zellulosefasern zwischen 35 und 75 Gew.-%, bezogen auf das Gesamtgewicht des Textilprodukts, liegt, vorzugsweise zwischen 40 und 60 Gew.-%.

5. Insektenabwehrendes Textilprodukt nach mindestens einem der Ansprüche 1 bis 4, wobei die synthetischen Fasern Polyamidfasern umfassen und wobei die Polyamidfasern aliphatische oder aromatische Polyamidfasern umfassen.

6. Insektenabwehrendes Textilprodukt nach Anspruch 5, wobei
- die Menge der aliphatischen Polyamidfasern zwischen 1 und 25 Gew.-%, bezogen auf das Gesamtgewicht des Textilprodukts, liegt, vorzugsweise zwischen 5 und 15 Gew.-%, und
- die Menge der aromatischen Polyamidfasern zwischen 20 und 50 Gew.-%, bezogen auf das Gesamtgewicht des Textilprodukts, liegt, vorzugsweise zwischen 30 und 40 Gew.-%.

7. Insektenabwehrendes Textilprodukt nach mindestens einem der Ansprüche 1 bis 6, wobei die Menge des Insektenabwehrmittels zwischen 0,25 und 5,00 Gew.-%, bezogen auf das Gesamtgewicht des Textilprodukts, liegt, vorzugsweise zwischen 0,50 und 2,00 Gew.-%.

8. Insektenabwehrendes Textilprodukt nach Anspruch 7, wobei das Insektenabwehrmittel aus der Gruppe ausgewählt ist, die aus Permethrin, Pyrethrin, Icaridin, Cyfluthrin, Deltamethrin, Pyrethroiden und Mischungen daraus besteht.

9. Insektenabwehrendes Textilprodukt nach mindestens einem der Ansprüche 1 bis 8, wobei das Textilprodukt ein Gewebe ist.

10. Insektenabwehrendes Garn, Folgendes umfassend:
- eine Menge Zellulosefasern, die zwischen 35 und 60 Gew.-%, bezogen auf das Gesamtgewicht des Garns, liegt, und
- eine Menge von Fasern, die ein Insektenabwehrmittel umfassen, die zwischen 1 und 30 Gew.-%, bezogen auf das Gesamtgewicht des Garns, liegt, vorzugsweise zwischen 3 und 20 Gew.-%, wobei die Faser, die ein Insektenabwehrmittel umfasst, eine extrudierte Zellulosefaser ist, die mikrofeine Dispersionen des Insektenabwehrmittels umfasst,
**dadurch gekennzeichnet, dass** das insektenabwehrende Garn ferner eine Menge von Meta-Aramidfasern umfasst, die zwischen 5 und 50 Gew.-%, bezogen auf das Gesamtgewicht des Garns, liegt, vorzugsweise zwischen 10 und 40 Gew.-%, und eine Menge von Para-Amidfasern, die zwischen 1 und 30 Gew.-%, bezogen auf das Gesamtgewicht des Garns, liegt, vorzugsweise zwischen 3 und 20 Gew.-%.

11. Insektenabwehrendes Garn nach Anspruch 10, wobei die Zellulosefasern extrudierte Zweikomponentenfasern mit einer Zellulosewand und mit einem Kern sind, der die Dispersion des Insektenabwehrmittels umfasst.

12. Insektenabwehrendes Garn nach Anspruch 10 oder 11, wobei das Garn eine Menge von aliphatischem Polyamids umfasst, die zwischen 1 und 30 Gew.-%, bezogen auf das Gesamtgewicht des Garns, liegt, vorzugsweise zwischen 2 und 20 Gew.-%.

13. Verfahren zur Produktion eines insektenabwehrenden Textilprodukts nach mindestens einem der Ansprüche 1 bis 9, die folgenden Schritte umfassend:
- Bilden einer Fasermischung, die mindestens eine extrudierte Zellulosefaser, welche mikrofeine Dispersionen eines Insektenabwehrmittels umfasst, eine synthetische Faser und mindestens 35 Gew.-% Zellulosefasern umfasst, wobei die synthetischen Fasern Polyesterfasern und/oder Polyamidfasern umfassen,
- Spinnen der Fasermischung zu einem Garn und
- das Weben des Garns zu einem Gewebe.

14. Kleidungsstück, ein insektenabwehrendes Textilprodukt nach einem der Ansprüche 1 bis 9 oder ein insektenabwehrendes Garn nach einem der Ansprüche 10 bis 12 umfassend.

## Revendications

1. Produit textile insectifuge comprenant :
au moins une ou plusieurs fibres de cellulose et une ou plusieurs fibres de cellulose extrudée comprenant un moyen répulsif contre les insectes,
dans lequel lesdites fibres de cellulose sont comprises en une quantité d'au moins 35 % en poids par rapport au poids total du produit textile, dans lequel ladite fibre extrudée de cellulose comprend des dispersions micro-fines du moyen insectifuge, **caractérisé en ce que** le produit textile insectifuge comprend en outre une ou plusieurs fibres synthétiques, dans lequel lesdites fibres synthétiques comprennent des fibres de polyester et/ou des fibres de polyamide.

2. Produit textile insectifuge selon la revendication 1, dans lequel lesdites fibres extrudées de cellulose sont des fibres hétérogènes comprenant une phase continue de cellulose et une phase discontinue comprenant un moyen insectifuge.

3. Produit textile insectifuge selon la revendication 1 ou 2, dans lequel les fibres de cellulose comprennent des fibres de coton, de viscose ou de viscose ignifugeante.

4. Produit textile insectifuge selon au moins l'une des revendications 1 à 3, dans lequel la quantité de fibres de cellulose se situe entre 35 et 75 % en poids par rapport au poids total du produit textile, de préférence entre 40 et 60 % en poids.

5. Produit textile insectifuge selon au moins l'une des revendications 1 à 4, dans lequel lesdites fibres synthétiques comprennent des fibres de polyamide et dans lequel les fibres de polyamide comprennent des fibres de polyamide aliphatique et aromatique.

6. Produit textile insectifuge selon la revendication 5, dans lequel
- la quantité de fibres de polyamide aliphatique se situe entre 1 et 25 % en poids par rapport au poids total du produit textile, de préférence entre 5 et 15 % en poids, et
- la quantité de fibres de polyamide aromatique se situe entre 20 et 50 % en poids par rapport au poids total du produit textile, de préférence entre 30 et 40 % en poids.

7. Produit textile insectifuge selon au moins l'une des revendications 1 à 6, dans lequel la quantité de moyen insectifuge se situe entre 0,25 et 5,00 % en poids par rapport au poids total du produit textile, de préférence entre 0,50 et 2,00 % en poids.

8. Produit textile insectifuge selon la revendication 7, dans lequel le moyen insectifuge est choisi dans le groupe constitué de la perméthrine, de la pyréthrine, de l'icaridine, de la cyfluthrine, de la deltaméthrine, des pyréthroïdes et des mélanges de ceux-ci.

9. Produit textile insectifuge selon au moins l'une des revendications 1 à 8, dans lequel le produit textile est un tissu.

10. Fil insectifuge comprenant :
- une quantité de fibres de cellulose se situant entre 35 et 60 % en poids par rapport au poids total du fil, et
- une quantité de fibre comprenant un moyen insectifuge se situant entre 1 et 30 % en poids par rapport au poids total du fil, de préférence entre 3 et 20 % en poids, dans lequel ladite fibre comprenant un moyen insectifuge est une fibre extrudée de cellulose comprenant des dispersions micro-fines du moyen insectifuge,
**caractérisé en ce que,** le fil insectifuge comprend en outre une quantité de fibres de méta-aramide se situant entre 5 et 50 % en poids par rapport au poids total du fil, de préférence entre 10 et 40 % en poids, et une quantité de fibres de para-aramide se situant entre 1 et 30 % en poids par rapport au poids total du fil, de préférence entre 3 et 20 % en poids.

11. Fil insectifuge selon la revendication 10, dans lequel lesdites fibres de cellulose sont des fibres extrudées à deux composants avec une paroi de cellulose et avec un noyau comprenant ladite dispersion dudit moyen insectifuge.

12. Fil insectifuge selon la revendication 10 ou 11, dans lequel le fil comprend une quantité de polyamide aliphatique se situant entre 1 et 30 % en poids par rapport au poids total du fil, de préférence entre 2 et 20 % en poids.

13. Procédé de production d'un produit textile insectifuge selon au moins l'une des revendications 1 à 9 comprenant les étapes de :
- formation d'un mélange de fibres comprenant au moins une fibre extrudée de cellulose comprenant des dispersions micro-fines d'un moyen insectifuge, une fibre synthétique et au moins 35 % en poids de fibres de cellulose, dans lequel lesdites fibres synthétiques comprennent des fibres de polyester et/ou des fibres de polyamide,
- filage du mélange de fibres en un fil, et
- tissage du fil en un tissu.

14. Vêtement comprenant un produit textile insectifuge selon l'une des revendications 1 à 9 ou un fil insectifuge selon l'une des revendications 10 à 12.
